# EUROPÄISCHE PATENTSCHRIFT

(11) **EP 2 419 261 B1**
(45) Veröffentlichungstag und Bekanntmachung des Hinweises auf die Patenterteilung: **11.05.2016**
(21) Anmeldenummer: 10708765.2
(22) Anmeldetag: 12.03.2010
(51) Int. Cl.: B29C 70/48, B29C 70/44

(54) **WERKZEUG UND VERFAHREN ZUR HERSTELLUNG EINES VERBUNDBAUTEILS MITTELS EINER ZWEITEILIGEN FORM UND EINER MEMBRANE**
TOOL AND METHOD OF FABRICATION OF A COMPOSITE PART USING A TWO PART MOLD AND A MEMBRANE
OUTILLAGE ET METHODE DE FABRICATION D'UNE PIECE COMPOSITE UTILISANT UN MOULE EN DEUX PARTIES ET UNE MEMBRANE

(30) Priorität: 15.04.2009 DE 102009017512; 15.04.2009 US 169624 P
(43) Veröffentlichungstag der Anmeldung: 22.02.2012
(73) Patentinhaber: Airbus Operations GmbH, 21129 Hamburg (DE)
(72) Erfinder: NOTHDURFT, Matthias, 73614 Haubersbronn (DE); DRESSLER, Günther, 88090 Immenstaad (DE); SUNDERMANN, Rolf-Georg, 21614 Buxtehude (DE); LONSDORFER, Georg, 21682 Stade (DE)
(74) Vertreter: Kopf Westenberger Wachenhausen Patentanwälte PartG mbB
(86) Internationale Anmeldenummer: PCT/EP2010/053199
(87) Internationale Veröffentlichungsnummer: WO 2010/118923

(56) Entgegenhaltungen:
- EP-A1- 1 992 467
- EP-A2- 1 013 409
- WO-A1-2005/000566
- DE-C1- 19 630 840
- GB-A- 1 181 383

## Beschreibung

### Gebiet der Erfindung

Diese Erfindung betrifft das Herstellen eines Verbundbauteils. Insbesondere betrifft die Erfindung ein Werkzeug zum Herstellen eines Verbundbauteils, ein Verfahren zum Herstellen eines Verbundbauteils und die Verwendung eines Werkzeugs zur Herstellung des Verbundbauteils für ein Flugzeug.

### Technischer Hintergrund

Verbundbauteile können mit dem sogenannten "Resin Transfer Moulding" (RTM-Verfahren) hergestellt werden. Bei dieser Form der Herstellung von Verbundbauteilen wird eine Fasermatte in einer Werkzeugkavität eines Werkzeugs angeordnet, und dann bei vollständig geschlossenem Werkzeug mit Harz getränkt. Die Fasermatte kann unterschiedlich aufgebaut sein, beispielsweise kann die Fasermatte aus einzelnen nicht verwobenen Fasern, aus einem Fasergewebe oder einem Vlies bestehen. Bei den Fasern kann es sich beispielsweise um Kohlenstofffasern handeln. Während die Fasermatte mit dem Harz, in der Regel Kunstharz, wie etwa Epoxidharz, getränkt wird, füllt das flüssige Harz die Werkzeugkavität vollständig aus. Danach verfestigt sich das Harz innerhalb der Werkzeugkavität, beispielsweise durch eine chemische Reaktion die durch erwärmen des Harzes ausgelöst wird, und ein Verbundbauteil, das aus der Fasermatte und dem verfestigten Harz gebildet ist entsteht.

Aus der DE 10 2005 053 691 A1 oder der WO 2007 054 268 A1 ist ein Werkzeug zur Durchführung des RTM-Verfahrens bekannt.

Beim Aushärten verringert sich das Volumen des Harzes bis zu etwa 3 %. Bei Verwendung von Faserhalbzeugen mit zusätzlichem Material, welches sich während der Infiltration durch das Harz mit dem Harz löst, um z.B. mechanische Eigenschaften des Harzes zu verändern, kann sich das Volumen des Faserhalbzeugs nach der Infiltration um bis zu 20% verringern gegenüber dem Zustand vor der Infiltration. Das kann dazu führen, dass, vor allem bei einem Verbundbauteil mit besonders dicken Abschnitten, das Verbundbauteil durch Volumenschrumpfung nicht mehr die durch die Werkzeugkavität definierte Geometrie aufweist. Außerdem können sich dadurch, dass der Druck im Werkzeug durch das Schrumpfen sinkt, im Verbundbauteil Blasen bilden, die die lokale Festigkeit des Verbundbauteils senken.

Aus der EP 1 013 409 A2 ist ein Verfahren bekannt, bei dem anstelle einer steifen Gegenform eine flexible Membran verwendet wird. Eine Fasermatte wird auf eine steife Negativform aufgebracht und mit der flexiblen Membran abgedeckt. Auf die Membran wird ein Gegendruck aufgebracht, so dass ein Formbauteil entsteht, dessen eine Seite wie die Negativform geformt ist. Für die an der flexiblen Membran anliegende andere Seite des herzustellenden Verbundbauteils kann keine vordefinierte Geometrie vorgegeben werden.

Die EP 1 992 467 A1 zeigt ein Werkzeug für die Herstellung eines faserverstärkten Kunststoffbauteils. Das Werkzeug weist mindestens zwei Werkzeugteile auf, die eine Kavität ausbilden, in die Fasern sowie ein Kunststoff zur Ausbildung des Kunststoffbauteils eingebracht werden können. Zumindest ein Werkzeugteil ist im Bereich der Kavität zumindest teilweise nachgiebig ausgebildet.

Die WO 2005/000566 A1 betrifft eine Werkzeuganordnung und ein Verfahren zum Verwenden der Werkzeuganordnung zum Herstellen eines Verbundbauteils. Das Verfahren umfasst das Einspritzen einer Matrix in die Werkzeuganordnung, die eine Verstärkung und ein deformierbares Bauteil enthält, das das Imprägnieren der Matrix in Richtung der Verstärkung fördert.

### Zusammenfassung der Erfindung

Eine Aufgabe der Erfindung ist es, Verbundbauteile mit einheitlicher Festigkeit und exakt vordefinierter Geometrie herstellen zu können.

Diese Aufgabe wird durch den Gegenstand der unabhängigen Ansprüche gelöst. Weitere Ausführungsformen ergeben sich aus den abhängigen Ansprüchen.

Gemäß einer Ausführungsform der Erfindung wird ein Werkzeug zum Herstellen eines Verbundbauteils bereitgestellt. Das Werkzeug umfasst eine erste Form, eine zweite Form und ein Druckerzeugungsmittel, wobei zwischen der ersten Form und der zweiten Form oder auch weiteren Formteilen eine Membran anordenbar ist, so dass zwischen der ersten

Form und der Membran ein erster Bereich und zwischen der zweiten Form und der Membran ein zweiter Bereich gebildet ist, wobei im ersten Bereich eine Fasermatte anordenbar ist, wobei die Fasermatte mit Harz getränkt oder mit Harz tränkbar ist, wobei im zweiten Bereich durch das Druckerzeugungsmittel ein Gegendruck hergestellt werden kann oder ein Gegendruck herstellbar ist, so dass die Membran in Richtung der Fasermatte gedrückt wird oder gedrückt ist (wenn der Gegendruck aufgebaut ist).

Zum Herstellen eines Verbundbauteils kommt ein wenigstens zwei Formen, beispielsweise eine erste starre Form und eine zweite starre Form umfassendes Werkzeug zum Einsatz. Das Werkzeug kann auch mehrteilig sein. Eine über eine oder mehrere der Werkzeugflächen geformte, dicht abschließende Membran bildet einen bedruckbaren Raum, den zweiten Bereich. Der Gegendruck im zweiten Bereich kann durch jedes beliebige Fluid, wie etwa eine Flüssigkeit, wie beispielsweise Wasser, oder ein Gas, wie etwa Luft, erzeugt werden. Der Gegendruck kann dadurch entstehen, dass der Druck im zweiten Bereich größer ist als in einer Umgebung des Werkzeugs, oder dass der Druck im zweiten Bereich größer ist als der Druck im ersten Bereich. Der Gegendruck kann auch durch einen Überdruck entstehen oder ein Überdruck sein.

Durch das Verbundbauteil oder die Fasermatte auf beiden Seiten umgebende steife Werkzeugflächen können eine definierte Bauteildicke bzw. exakt kalibrierte Bauteilflächen hergestellt werden.

Die Membran kann vollständig fluidundurchlässig sein. Die Membran kann eine Folie, wie zum Beispiel eine Kunststofffolie oder eine Metallfolie, aber auch eine Membran aus Gummi sein. Die Membran kann auch teilweise fluiddurchlässig sein, beispielsweise durch Poren. In diesem Fall kann der Gegendruck im zweiten Bereich dadurch aufrechterhalten werden, dass Fluid in den zweiten Bereich nachgeleitet wird.

Die erste Form kann eine obere Form und die zweite Form eine untere Form sein. Dadurch wird die Membran durch den Gegendruck nach oben gedrückt. Durch die Schwerkraft kann das Harz durch die Fasermatte in Richtung Membran fließen.

Alternativ kann auch die erste Form eine untere Form, die zweite Form eine obere Form sein. Damit kann auf einfache Art und Weise die Fasermatte auf die zweite Form gelegt werden und darüber die Membran angeordnet werden.

Dass die Membran in Richtung der Fasermatte gedrückt wird, kann einerseits bedeuten, dass die Membran sich in Richtung der Fasermatte bewegt, kann aber auch bedeuten, dass die Membran einen Druck auf die Fasermatte ausübt, ohne sich zu bewegen.

Durch das Drücken der Membran in Richtung der Fasermatte kann der durch die Reaktion des Harzes bei der Verfestigung entstehende Schwund, bzw. die Volumenänderung des Faserhalbzeugs während der Injektion kompensiert werden. Auch kann auf diese Weise bereits bei teilweise geöffnetem Werkzeug, ein homogenes Befüllen des ersten Bereichs mit Harz auch bei Dickenschwankungen des Bauteils erreicht werden. Genauso ist ein homogenes Befüllen auch bei Bauteilen mit Abschnitten möglich, die sich normal bzw. nicht normal zum Vektor der Werkzeugschließung befinden. Somit wird die Fasertränkung bei Bauteilen mit Wanddickensprüngen besser beherrschbar. Auch eine Variation des Setzweges an normal bzw. nicht normal zur Schließrichtung des Werkzeugs stehenden Flächen kann besser beherrscht werden.

Alternativ zum Einleiten des Harzes in die Werkzeugkavität können wie beim sogenannten Prepreg-Verfahren bereits mit Harz getränkte Fasermatten im Werkzeug angeordnet werden.

Gemäß einer Ausführungsform umfasst das Werkzeug eine Harzzufuhr, und beispielsweise einen verschließbaren Harzablauf, wobei in den ersten Bereich über die Harzzufuhr dem Werkzeug Harz zum Tränken der Fasermatte zugeführt werden kann.

Die Fasermatte kann auch bei offenem Werkzeug mit Harz getränkt werden, da die in Richtung der Fasermatte gedrückte Membran verhindert, dass das Harz aus dem offenen Werkzeug heraus fließt. Mittels des Gegendrucks im zweiten Bereich kann dabei eingestellt werden, wie stark die Membran in Richtung Fasermatte gedrückt wird.

Dadurch kann trotz des hohen Fließwiderstandes des Harzes die Infusionszeit in Bezug auf das RTM-Verfahren verkürzt werden. Durch die Variation des Druckes im bedruckten zweiten Raum oder Bereich kann der Fließwiderstand bei der Fasertränkung eingestellt werden.

Die Harzzufuhr kann einen Anschluss des Werkzeugs umfassen, über den Harz unter Druck über eine Leitung aus einem Harzreservoir im ersten Bereich geleitet werden kann. Der erste Bereich kann auch einen weiteren Anschluss aufweisen, über den Luft oder Wasser oder ganz allgemein ein Fluid aus dem ersten Bereich gesaugt werden kann. Dabei kann sichergestellt werden, dass beim Tränken der Fasermatte mit Harz keinerlei Fluid im ersten Bereich verbleibt.

Gemäß einer Ausführungsform ist die Harzzufuhr in der ersten Form ausgebildet. Die erste Form kann dazu eine oder mehrere Bohrungen enthalten, über die das Harz in den ersten Bereich geleitet wird.

Gemäß einer weiteren Ausführungsform umfasst das Druckerzeugungsmittel eine Fluidzufuhr, wobei über die Fluidzufuhr dem Werkzeug Fluid zum Herstellen des Gegendrucks zugeführt werden kann bzw. zuführbar ist. Der Gegendruck kann durch Zuführen eines Fluids über eine Fluidleitung aus einem Fluidreservoir hergestellt werden oder herstellbar sein.

Gemäß einer Ausführungsform kann die Fluidzufuhr in der zweiten Form ausgebildet sein. Dazu kann die zweite Form eine oder mehrere Bohrungen aufweisen, über das Fluid in den zweiten Bereich geleitet werden kann.

Gemäß einer Ausführungsform wird ein Werkzeug bereitgestellt, wobei ein Abschnitt der ersten Form die Oberflächengeometrie einer ersten Seite des Verbundbauteils definiert und ein Abschnitt der zweiten Form die Oberflächengeometrie einer zweiten Seite des Verbundbauteils definiert.

Die Geometrie des Verbundbauteils kann vollständig durch die einander gegenüberliegenden Abschnitte definiert werden. Auch die der Membran zugewandte Oberfläche des Verbundbauteils kann durch die Innengeometrie des Werkzeugs definiert werden. Wegen der durch das Werkzeug exakt definierbaren Geometrie des Verbundbauteils hat das Verbundbauteil an jeder Stelle eine exakte bestimmbare Dicke. Auch der Faservolumengehalt, das heißt das Verhältnis von Harz zu Fasern, kann exakt eingestellt werden.

Gemäß einer weiteren Ausführungsform wird ein Werkzeug bereitgestellt, wobei die erste Form und die zweite Form aufeinander zubewegbar sind, bis zu einer Endstellung, in der die erste Form und die zweite Form aneinander anliegen, wobei in der Endstellung zwischen der ersten Form und der zweiten Form ein Hohlraum gebildet ist. Die Endstellung kann auch erreicht werden, wenn zwischen den Formen noch ein kleiner Restschließweg vorhanden ist.

Wenn die erste Form und die zweite Form aneinander anliegen oder auf Block gegangen sind, wird durch die Abschnitte der ersten Form und der zweiten Form ein Hohlraum gebildet, der die Geometrie des Verbundbauteils definiert.

Gemäß einer Ausführungsform definiert der Hohlraum die Geometrie des zu erzeugenden Verbundbauteils.

Dieser Hohlraum kann durch die Membran in die beiden Bereiche getrennt werden.

Gemäß einer Ausführungsform wird ein Werkzeug bereitgestellt, wobei die erste Form und die zweite Form bis zu einer Zwischenstellung aufeinander zubewegbar sind, in der die erste Form und die zweite Form weiter aufeinander zubewegbar sein können.

Gemäß einer Ausführungsform ist der erste Bereich in der Zwischenstellung gegenüber der Umgebung des Werkzeugs abgedichtet. Damit wird in der Zwischenstellung des Werkzeugs ein Raum, der erste Bereich, geschaffen, in dem die Fasermatte mit Harz getränkt werden kann. Kein Harz kann den ersten Bereich während des Tränkens verlassen.

Gemäß einer weiteren Ausführungsform ist der zweite Bereich in der Zwischenstellung gegenüber der Umgebung des Werkzeugs abgedichtet. Bereits in der Zwischenstellung kann der zweite Bereich mit Druck beaufschlagt werden. In der Zwischenstellung ist der zweite Bereich gegenüber der Umgebung abgedichtet und kann so beispielsweise durch Zuführen eines Fluids unter Druck gesetzt werden, um den Gegendruck im zweiten Bereich zu erzeugen.

Gemäß einer Ausführungsform umfasst das Werkzeug eine Dichtung zum Abdichten des ersten Bereichs. Der erste Bereich kann in der Zwischenstellung gegenüber einer Umgebung des Werkzeugs durch die Dichtung abgedichtet sein.

Gemäß einer Ausführungsform umfasst das Werkzeug eine erste Dichtung zur Abdichtung des ersten Bereichs und/oder des zweiten Bereichs. Die erste Dichtung kann dabei mehrere Einzeldichtungen umfassen.

Die Dichtung kann den ersten Bereich zwischen der Zwischenstellung und der Endstellung des Werkzeugs abdichten. Dazu kann die erste Dichtung eine hohe Spalttoleranz zwischen den Werkz-cugsegmenten aufweisen. Das kann dadurch bewerkstelligt werden, dass die Dichtung einen Überstand über die Oberfläche der ersten oder der zweiten Form aufweist.

Gemäß einer Ausführungsform der Erfindung kann die Dichtung auch den zweiten Bereich abdichten. Die Dichtung kann den zweiten Bereich zwischen der Zwischenstellung und der Endstellung des Werkzeugs gegenüber der Umgebung des Werkzeugs abdichten.

Ist die Dichtung an der ersten Form angebracht, kann ab der ersten Zwischenstellung der erste Bereich durch einen Abschnitt der erste Form und einen Abschnitt der Membran innerhalb der Dichtung und der Dichtung abgeschlossen oder begrenzt werden. Der zweite Bereich kann durch einen Abschnitt der zweiten Form und den Abschnitt der Membran innerhalb der Dichtung abgeschlossen werden.

Gemäß einer Ausführungsform wird ein Werkzeug bereitgestellt, das neben der ersten Dichtung eine zweite Dichtung zum Abdichten des ersten Bereichs und/oder des zweiten Bereichs umfasst. Dies kann dadurch bewerkstelligt werden, dass die zweite Dichtung einen Überstand gegenüber einer Oberfläche der ersten oder der zweiten Form aufweist. Die zweite Dichtung kann außerhalb der ersten Dichtung angeordnet sein. Dabei kann die erste Dichtung an der ersten Form und die zweite Dichtung an der zweiten Form befestigt sein. Beide Dichtungen können den gleichen Überstand aufweisen.

Gemäß einer Ausführungsform der Erfindung umfasst das Werkzeug eine zweite Dichtung zum Abdichten des ersten und des zweiten Bereichs, wobei die erste Dichtung an der ersten Form befestigt ist und den ersten Überstand über die Oberfläche der ersten Form aufweist, wobei die zweite Dichtung an der zweiten Form befestigt ist und einen zweiten Überstand über die Oberfläche der zweiten Form aufweist.

Die erste Dichtung und/oder die zweite Dichtung können den Hohlraum innerhalb des Werkzeugs bereits dann abdichten, wenn sich die erste und die zweite Form in einer der Zwischenstellung befinden. Dazu können die Dichtungen einen Überstand über die Oberflächen der beiden Formen aufweisen, der dem Spaltmaß des Werkzeugs in der Zwischenstellung entspricht oder etwas größer ist.

Gemäß einer Ausführungsform der Erfindung umfasst das Werkzeug eine dritte Dichtung zur Abdichtung des Hohlraums in der Endstellung des Werkzeugs. Die dritte Dichtung kann eine Überstand aufweisen, der geringer ist als der Überstand der ersten oder der zweiten Dichtung. Damit kann sichergestellt werden, dass der Hohlraum, der in der Endstellung des Werkzeugs unter einem sehr hohem Druck stehen kann, auch gegenüber der Umgebung abgedichtet ist, wenn die erste Dichtung oder die zweite Dichtung gegenüber diesen Drucken nicht vollständig dicht halten können.

Gemäß einer Ausführungsform der Erfindung umfasst das Werkzeug eine dritte Dichtung zum Abdichten des ersten und des zweiten Bereichs. Die dritte Dichtung kann an der ersten Form befestigt sein. Die dritte Dichtung kann mehrere Einzeldichtungen umfassen.

Gemäß einer Ausführungsform der Erfindung weist die dritte Dichtung einen dritten Überstand auf, der geringer ist als der erste Überstand und/oder der zweite Überstand.

Gemäß einer Ausführungsform der Erfindung ist die dritte Dichtung in Bezug auf den ersten Bereich und den zweiten Bereich weiter außen angeordnet als die erste Dichtung und/oder die zweite Dichtung. Die zweite Dichtung kann weiter außen als die erste Dichtung angeordnet sein.

Gemäß einer Ausführungsform ist die Membran mit der zweiten Form mechanisch verbunden. Die Membran kann auch mit der zweiten Form verbunden sein, wenn das Werkzeug vollständig geöffnet ist und sich nicht in der Endstellung oder der Zwischenstellungen befindet.

Andererseits kann für jeden Herstellungsvorgang für ein Verbundbauteil eine Einwegmembran verwendet werden, so dass keine Reinigung des Werkzeugs von Harzresten zumindest auf Membranseite nötig ist. Dabei kann die Membran auch am Bauteil verbleiben, beispielsweise am Verbundbauteil festgeklebt werden. Auf diese Weise wird gleichzeitig eine Möglichkeit zur Bauteilkaschierung geschaffen. Andererseits kann die Membran auch weitere Zusatzfunktionen am Verbundbauteil übernehmen, wie zum Beispiel, dass das Verbundbauteil besser verklebt werden kann oder eine metallische Oberfläche aufweist.

Die Erfindung betrifft auch ein Verfahren zum Herstellen eines Verbundbauteils. Gemäß einer Ausführungsform umfasst das Verfahren die Schritte: Anordnen einer Fasermatte in einem ersten Bereich zwischen einer ersten Form eines Werkzeugs und einer im Werkzeug angeordneten Membran; Aufeinanderzubewegen der ersten Form und einer zweiten Form des Werkzeugs bis zu einer Zwischenstellung, in der ein zweiter Bereich zwischen der zweiten Form und der Membran gegenüber der Umgebung des Werkzeugs abgedichtet ist; und Erzeugen eines Gegendrucks in dem zweiten Bereich, so dass die Membran in Richtung der Fasermatte gedrückt wird. Die Fasermatte kann mit Harz getränkt sein oder mit Harz tränkbar sein.

Bereits dann, wenn das Werkzeug in der Zwischenstellung nicht vollständig auf Endmaß geschlossen ist, wird der zweite Bereich zwischen Membran und Werkzeug bedruckt, so dass die Membran in Richtung der Fasermatte gedrückt wird und den ersten Bereich zwischen dem Werkzeug und der Membran und die darin befindliche Fasermatte unter Druck setzt. Somit kann das Tränken der Fasermatte mit Harz sowie der Faservolumengehalt des Verbundbauteils durch den im zweiten Bereich erzeugten Gegendruck eingestellt werden.

Gemäß einer Ausführungsform umfasst das Verfahren ein Zuführen von Harz in den ersten Bereich zum Tränken der Fasermatte.

Gemäß einer Ausführungsform umfasst das Verfahren ein Anordnen der Membran zwischen der ersten und der zweiten Form.

Gemäß einer Ausführungsform umfasst das Verfahren ein Aufeinanderzubewegen der ersten Form und der zweiten Form bis zu einer Endstellung, wobei in der Endstellung zwischen der ersten Form und der zweiten Form ein Hohlraum gebildet ist, der die Geometrie des Verbundbauteils definiert.

In der Endstellung kann die exakte Außengeometrie des Verbundbauteils durch den Hohlraum bestimmt werden.

Gemäß einer Ausführungsform umfasst das Verfahren ein Tränken der Fasermatte mit Harz, bevor die erste und die zweite Form in die Endstellung bewegt werden. Beispielsweise kann die Fasermatte bereits mit Harz getränkt sein, wenn sie in das Werkzeug eingelegt bzw. angeordnet wird. Auch kann die Fasermatte im Werkzeug, beispielsweise in der Zwischenstellung mit Harz getränkt werden.

Gemäß einer Ausführungsform umfasst das Verfahren ein Verbinden der Membran mit der Fasermatte, beispielsweise ein Verkleben. Das Verkleben der Membran mit dem Verbundbauteil kann durch das aushärtende Harz erfolgen.

Gemäß einer Ausführungsform der Erfindung umfasst das Verfahren ein Abdichten des ersten und/oder des zweiten Bereichs durch eine erste Dichtung und/oder eine zweite Dichtung in der Zwischenstellung. Dabei kann das Abdichten dadurch erreicht werden, das die erste Dichtung und/oder die zweite Dichtung einen Überstand aufweisen, der dem Spaltmaß des Werkzeugs in der Zwischenstellung entspricht oder größer als das Spaltmaß ist.

Gemäß einer Ausführungsform der Erfindung umfasst das Verfahren ein Abdichten des ersten und/oder des zweiten Bereichs durch eine dritte Dichtung in der Endstellung. Die dritte Dichtung kann dabei einen geringeren Überstand aufweisen als die erste oder die zweite Dichtung.

Das Verfahren betrifft auch die Verwendung eines erfindungsgemäßen Werkzeugs zur Herstellung eines Verbundbauteils für ein Flugzeug. Insbesondere für Flugzeugbauteile ist eine vordefinierte einheitliche Festigkeit bei möglichst geringem Gewicht vorteilhaft. Mit dem Verfahren kann dadurch, dass der Faservolumengehalt exakt eingestellt werden kann, ein optimales Verhältnis von Festigkeit zu Gewicht erreicht werden.

Die Erfindung wird nachfolgend mit Bezug auf die beiliegenden Figuren anhand von Ausführungsbeispielen detailliert beschrieben.

### Kurze Beschreibung der Figuren

Fig. 1 zeigt einen Längsschnitt durch ein Werkzeug gemäß einem Ausführungsbeispiel der Erfindung.
Fig. 2 zeigt ein schematisches Diagramm einer Pressenanordnung, in der ein Werkzeug gemäß einem Ausführungsbeispiel der Erfindung angeordnet ist.
Fig. 3 zeigt ein Flussdiagramm für den Ablauf eines Verfahrens gemäß einem Ausführungsbeispiel der Erfindung.

### Detaillierte Beschreibung der Ausführungsbeispiele

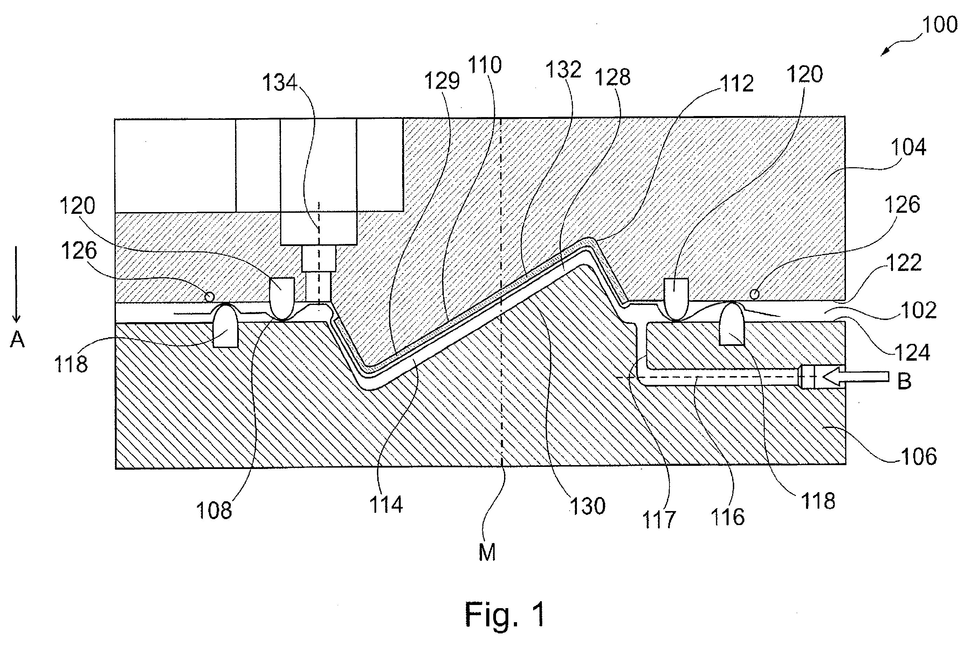

Die Fig. 1 zeigt ein Werkzeug 100 in einer Zwischenstellung, in der der Werkzeugspalt 102 nicht vollständig auf Endmaß geschlossen ist. Der Werkzeugspalt 102 oder die Werkzeugkavität 102 wird dabei von einer ersten Form 104 und einer zweiten Form 106 gebildet. Das Werkzeug kann auch aus mehr als zwei Formen, beispielsweise aus einer Mehrzahl von Formen oder Werkzeugteilen aufgebaut sein. Die zweite Form 106 ist in Richtung des Pfeils A unterhalb der ersten Form 104 angeordnet. Die beiden Formen 104 und 106 können in Richtung des Pfeils A aufeinander zu und voneinander weg bewegt werden.

Zwischen den beiden Formen 104 und 106 ist eine Membran 108 angeordnet. Zwischen der Membran 108 und der ersten Form 104 ist ein erster Bereich 110 gebildet, in dem sich eine Fasermatte 112 befindet. Der Fasermatte 112 und dem ersten Bereich 110 gegenüberliegend auf der anderen Seite der Membran 108 befindet ein zweiter Bereich 114. Der zweite Bereich 114 ist über eine Luft- oder Fluidzufuhr 116 als Druckerzeugungsmittel verbunden, indem, wie durch den Pfeil B angedeutet, Luft oder Fluid in den zweiten Bereich 114 zur Erzeugung eines Gegendrucks geleitet oder gepumpt werden kann.

Zur Abdichtung des ersten Bereichs 110 und des zweiten Bereichs 114 ist eine erste Dichtung 120 an der ersten Form befestigt und eine zweite Dichtung 118 an der zweiten Form befestigt. Bezüglich einer Mittelachse M des Werkzeugs umgibt die erste Dichtung 120 die Fasermatte 112 vollständig. Bezüglich der Mittelachse M umgibt die zweite Dichtung 118 die Fasermatte 112 und die erste Dichtung 120.

Die erste Dichtung 120 steht dabei über die Oberfläche 122 der ersten Form 104 so weit über, dass sie in der in der Fig. 1 gezeigten Zwischenstellung die Membran 108 abschnittsweise gegen eine Oberfläche 124 der zweiten Form 106 presst. Genauso steht die zweite Dichtung 118 so weit über die Oberfläche 124 der zweiten Form 106 über, das sie in der in der Fig. 1 gezeigten Zwischenstellung die Membran 108 abschnittsweise gegen die Oberfläche 122 der ersten Form 104 presst. Der absolute Überstand der beiden Dichtungen 118 und 120 hängt von der Auslegung der verwendeten Dichtung ab.

Die beiden Dichtungen 118 und 120 können aus einem Schaumstoffmaterial bzw. einem Kunststoff gefertigt sein, der ohne Beschädigung stark komprimiert werden kann, so dass die beiden Formen bis zu einer Endstellung in Richtung des Pfeils A aufeinander zu bewegt werden können, bis die beiden Flächen 124 und 122 aneinander anliegen.

Bezüglich der Mittelachse M kann außerhalb der beiden Dichtungen 118 und 120 und der Fasermatte 112 an der ersten Form eine weitere dritte Dichtung 126 angebracht werden, deren Überstand im Verhältnis zum Überstand der beiden Dichtungen 118 und 120 gering, beispielsweise 0,2 mm, ist. Die dritte Dichtung 126 soll gewährleisten, dass, wenn die beiden Formen 104 und 106 in der Endstellung auf Endmaß geschlossen sind, der Druck innerhalb eines Hohlraums 128 aufrechterhalten werden kann, falls die beiden Dichtungen 118 und 120 versagen sollten.

In der Endstellung, in der die Oberflächen 122 und 124 aneinander anliegen, ist in dem geschlossen Werkzeug 100 eine Kavität 128 bzw. ein Hohlraum 128 gebildet, der durch den Abschnitt 130 der zweiten Form 106 und den Abschnitt 132 der ersten Form 104 gebildet ist. Die beiden Abschnitte 130 und 132 definieren die Geometrie des herzustellenden Verbundbauteils 129.

Die erste Form 104 weist eine Harzzufuhr 134 bzw. Harzangussanschluss 134 auf. Von der Mittelachse M aus betrachtet befinden sich der Harzzufuhr 134 und eine Verbindung 117 der Fluidzufuhr 116 mit dem zweiten Bereich 114 innerhalb der beiden Dichtungen 118 und 120.

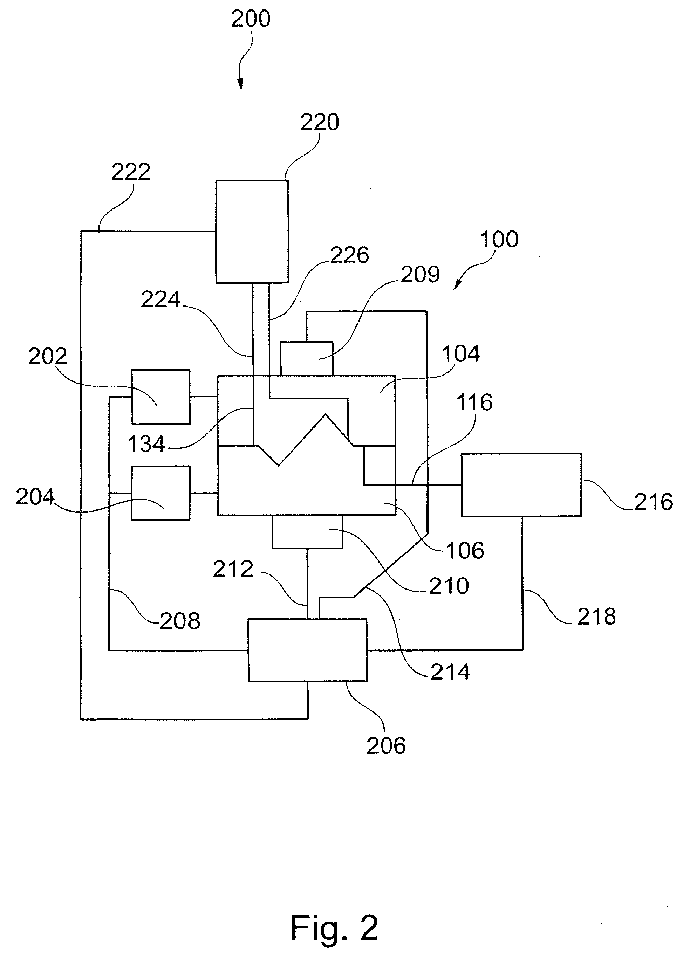

Die Fig. 2 zeigt ein schematisches Diagramm einer Presse 200, in der das Werkzeug 100 angeordnet ist. Die erste Form 104 und die zweite Form 106 können über Hub-, Senk- oder Schließeinrichtungen 202 und 204 aufeinander zu und voneinander weg bewegt werden. Diese Bewegung wird von der Steuereinheit 206 über eine Signalleitung 208 gesteuert.

Weiter können die erste Form 104 über eine Heizeinrichtung 209 und die zweite Form 106 über eine Heizeinrichtung 210 auf eine vorbestimmte Temperatur aufgeheizt werden. Diese Temperatur kann durch die Steuereinrichtung 206 über die Signalleitungen 212 und 214 gesteuert werden. Durch die erwärmten Formen 104 und 106 kann im Harz im Werkzeug eine chemische Reaktion ausgelöst bzw. beschleunigt werden, mit der das Harz aushärtet.

Die Pressenanordnung 200 umfasst eine Einrichtung 216, die einen Fluidspeicher, eine Pumpe, ein Ventil und/oder auch eine Sauganlage aufweisen kann und die über die Signalleitung 218 von der Steuereinrichtung 206 angesteuert werden kann. Mittels der Pumpe oder der Sauganlage in der Einrichtung 216 kann über die Fluidzufuhr 116 der zweite Bereich 114 innerhalb des Werkzeugs 100 mit Fluid bedruckt werden, oder das Fluid aus diesem Bereich 114 herausgesaugt werden.

Die Steuereinrichtung 206 kann über eine weitere Signalleitung 222 eine Einrichtung 220 ansteuern, die einen Harzspeicher, eine weitere Pumpe, ein weiteres Ventil, eine Förderschnecke und/oder eine weitere Sauganlage umfassen kann. Die Einrichtung 220 kann über die Harzzufuhrleitung 224 über die Harzzufuhr 134 Harz in den ersten Bereich 110 zwischen den beiden Werkzeughälften oder Formen 104 und 106 einleiten, und über eine weitere Leitung 226 im zweiten Bereich 114 befindliches Fluid, beispielsweise Luft, aus dem ersten Bereich 110 ableiten.

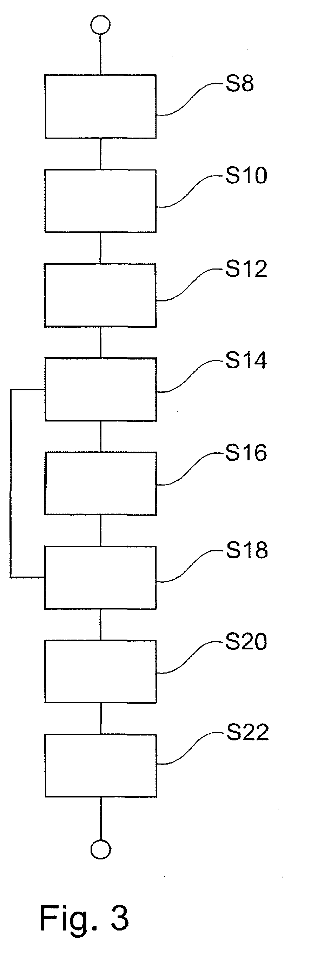

Die Fig. 3 zeigt ein Flussdiagramm, das den Ablauf des Verfahrens gemäß einem Ausführungsbeispiels der Erfindung schematisch darstellt.

In einem ersten Schritt S8 wird eine Membran 108 auf die zweite Form 106 und darauf eine Fasermatte 112 gelegt.

Im Schritt S10 wird die Werkzeugkavität nicht vollständig auf Endmaß geschlossen. Dazu bewegen die Hub-, Senk- oder Schließeinrichtungen 202 und 204 die beiden Formen 104 und 106 so lange aus einer geöffneten Stellung des Werkzeugs aufeinander zu, bis die in der Fig. 1 gezeigte Zwischenstellung der beiden Formen 104 und 106 erreicht ist. Auch die Formen 104 und 106 können in diesem Schritt oder auch in den anderen Schritten erwärmt werden.

In der Zwischenstellung sind nun der erste Bereich 110 und der zweite Bereich 114 durch die Dichtungen 118 und 120 gegenüber der Umgebung des Werkzeugs abgedichtet.

Im Schritt S12 wird der zweite Bereich 114 zwischen der Membran 108 und der zweiten Form 106 über die Luftzuführung oder Fluidzufuhr 116 unter Druck gesetzt. Dazu pumpt die Pumpe in der Einrichtung 216 Luft oder ein Fluid aus dem Fluidspeicher über die Fluidzufuhr 116 in den zweiten Bereich 114.

Im Schritt S14 wird durch die Einrichtung 220 Harz aus einem Harzspeicher über die Harzzufuhrleitung 224 und die Harzzufuhr 134 im Werkzeug 100 in den ersten Bereich 110 zwischen der Membran 108 und dem ersten Werkzeug 104 gefördert, beispielsweise mit Hilfe der Pumpe oder der Förderschnecke. Gleichzeitig wird das im ersten Bereich 110 befindliche Fluid bzw. die darin befindliche Luft über die Leitung 226 aus dem ersten Bereich 110 durch die Einrichtung 220 herausgesaugt.

Im Schritt S16 werden die beiden Formen 104 und 106 auf eine Endstellung aufeinander zu gefahren, in der die Oberflächen 122 und 124 des Werkzeugs aneinander anliegen.

Gleichzeitig zum Schritt S16 oder nach dem Schritt S16 wird in einem Schritt S18 der Druck im ersten Bereich 110 über den Druck im zweiten Bereich 114 erhöht. Dadurch beginnt sich das im zweiten Bereich 114 befindliche Druckkissen wieder zu verkleinern und das im zweiten Bereich 114 befindliche Fluid beginnt diesen durch die Fluidzufuhr 116 zu verlassen.

In einem Schritt S20 wird das im zweiten Bereich 114 befindliche Fluid durch Absenken des Drucks oder durch Absaugen des Fluids aktiv abgeleitet oder abgeblasen. Die Membran 108 liegt nun am Abschnitt 130 der zweiten Form 106 an. Die mit Harz getränkte Fasermatte 112 füllt den zwischen den Abschnitten 130 und 132 gebildeten Hohlraum 128 komplett aus. Überschüssiges Harz kann während des Zusammenfahrens der beiden Formen 104 und 106 über die Harzzufuhr 134 oder einem anderweitigen Auslass ausgepresst werden.

Die mit Harz getränkte Fasermatte 112 ist in der Endstellung der beiden Werkzeuge 104 und 106 auf beiden Seiten von den starren Formen 104 und 106 umgeben, beide Oberflächen des entstehenden Verbundbauteils 129 können durch die Abschnitte 130 und 132 der beiden Formen 104 und 106 geometrisch kalibriert werden.

In einem weiteren Schritt S22 kann über die Fluidzufuhr 116, Harzzufuhr 134 oder einen beispielsweise wenige Millimeter betragenden Werkzeugrestschließweg, ein Nachdruck bei geschlossenem Werkzeug 100 mit den beiden Formen 104 und 106 in der Endstellung ausgeübt werden. Dadurch kann die Bildung von Poren im Verbundbauteil 129 vermieden werden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Werkzeug (100) zum Herstellen eines Verbundbauteils (129), umfassend:
eine erste Form (104);
eine zweite Form (106);
ein Druckerzeugungsmittel (116);
wobei zwischen der ersten Form (104) und der zweiten Form (106), eine Membran (108) anordenbar ist, so dass zwischen der ersten Form (104) und der Membran (108) ein erster Bereich (110) und zwischen der zweiter Form (106) und der Membran (108) ein zweiter Bereich (114) gebildet ist;
wobei im ersten Bereich (110) eine Fasermatte (112) anordenbar ist;
wobei die Fasermatte (112) mit Harz getränkt oder mit Harz tränkbar ist;
wobei im zweiten Bereich (114) durch das Druckerzeugungsmittel (116) ein Gegendruck hergestellt werden kann, so dass die Membran (108) in Richtung der Fasermatte (112) gedrückt wird;
wobei das Werkzeug (100) eine erste Dichtung (120) zur Abdtchtung des ersten Bereichs (110) und des zweiten Bereichs (114) umfasst;
wobei die erste Dichtung (120) an der ersten Form (104) befestigt ist und einen ersten Überstand über die Oberfläche der ersten Form (104) aufweist;
wobei das Werkzeug eine weitere Dichtung (126) zum Abdichten des ersten Bereichs (110) und des zweiten Bereichs (114) umfasst;
wobei die weitere Dichtung einen weiteren Überstand aufweist, der geringer ist als der erste Überstand.

2. Werkzeug (100) nach Anspruch 1, weiter umfassend:
eine zweite Dichtung (118) zum Abdichten des ersten und des zweiten Bereichs;
wobei die zweite Dichtung (118) an der zweiten Form (106) befestigt ist und einen zweiten Überstand über die Oberfläche der zweiten Form (106) aufweist.

3. Werkzeug (100) nach Anspruch 1 oder 2,
wobei die weitere Dichtung (126) eine dritte Dichtung ist und an der ersten Form (104) befestigt ist;
wobei die dritte Dichtung in Bezug auf den ersten Bereich und den zweiten Bereich weiter außen angeordnet ist.

4. Werkzeug (100) nach einem der vorhergehenden Ansprüche, weiter umfassend:
eine Harzzufuhr (134),
wobei in den ersten Bereich (110) über die Harzzufuhr (134) dem Werkzeug (100) Harz zum Tränken der Fasermatte (112) zugeführt werden kann.

5. Werkzeug (100) nach Anspruch 4,
wobei die Harzzufuhr (134) in der erster Form (104) ausgebildet ist.

6. Werkzeug (100) nach einem der vorhergehenden Ansprüche,
wobei das Druckerzeugungsmittel eine Fluidzufuhr (116) aufweist,
wobei über die Fluidzufuhr (116) dem Werkzeug (100) Fluid zum Herstellen des Gegendrucks zugeführt werden kann.

7. Werkzeug (100) nach Anspruch 6,
wobei die Fluidzufuhr (116) in der zweiten Form (106) ausgebildet ist.

8. Werkzeug (100) nach einem der vorhergehenden Ansprüche,
wobei ein Abschnitt (132) der ersten Form (104) die Oberflächengeometrie einer ersten Seite des Verbundbauteils (129) definiert und ein Abschnitt (130) der zweiten Form (106) die Oberflächengeometrie einer zweiten Seite des Verbundbauteils (129) definiert.

9. Werkzeug (100) nach einem der vorhergehenden Ansprüche,
wobei die erste Form (104) und die zweite Form (106) aufeinander zu bewegbar sind, bis zu einer Endstellung, in der die erste Form (104) und die zweite Form (106) aneinander anliegen,
wobei in der Endstellung zwischen der erster Form (104) und der zweiter Form (106) ein Hohlraum (128) gebildet ist.

10. Werkzeug (100) nach Anspruch 9,
wobei der Hohlraum (128) die Geometrie des zu erzeugenden Verbundbauteils (129) definiert.

11. Werkzeug (100) nach einem der vorhergehenden Ansprüche,
wobei die erste Form (104) und die zweite Form (106) bis zu einer Zwischenstellung aufeinander zu bewegbar sind, in der die erste Form (104) und zweite Form (106) weiter aufeinander zu bewegbar sind;
wobei der erste Bereich (110) in der Zwischenstellung gegenüber der Umgebung des Werkzeugs (100) abgedichtet ist;
wobei der zweite Bereich (114) in der Zwischenstellung gegenüber der Umgebung des Werkzeugs (100) abgedichtet ist.

12. Werkzeug nach einem der vorhergehenden Ansprüche,
wobei die Membran mit der zweiten Form (106) mechanisch verbunden ist.

13. Verfahren zum Herstellen eines Verbundbauteils, umfassend die Schritte:
Anordnen einer Fasermatte (112) in einem ersten Bereich (110) zwischen einer ersten Form (104) eines Werkzeugs (100) und einer im Werkzeug (100) angeordneten Membran (108);
Aufeinanderzubewegen der ersten Form (104) und einer zweiten Form (106) des Werkzeugs (100) bis zu einer Zwischenstellung, in der ein zweiter Bereich (114) zwischen der zweiten Form (106) und der Membran (108) gegenüber der Umgebung des Werkzeugs (100) abgedichtet ist;
Erzeugen eines Gegendrucks in dem zweiten Bereich (114), so dass die Membran (108) in Richtung der Fasermatte (112) gedrückt wird.
Aufeinanderzubewegen der ersten Form (104) und der zweiten Form (106) bis zu einer Endstellung, wobei in der Endstellung zwischen der erster Form (104) und der zweiter Form (106) ein Hohlraum (128) gebildet ist, der die Geometrie des Verbundbauteils (129) definiert;
Tränken der Fasermatte (112) mit Harz, bevor die erste und die zweite Form in die Endstellung bewegt werden.

14. Verfahren nach Anspruch 13, weiter umfassend den Schritt:
Verbinden der Membran (108) mit der Fassermatte (112).

15. Verwendung eines Werkzeugs (100) nach einem der Ansprüche 1 bis 12 zur Herstellung eines Verbundbauteils für ein Flugzeug.

## Claims

1. A moulding tool (100) for manufacturing a composite component (129), comprising:
a first mould (104);
a second mould (106);
a pressure generating means (116);
wherein between the first mould (104) and the second mould (106), a membrane (108) is arrangeable, so that between the first mould (104) and the membrane (108) a first region (110) is formed, and between the second mould (106) and the membrane (108) a second region (114) is formed;
wherein in the first region (110) a fibrous mat (112) is arrangeable;
wherein the fibrous mat (112) is resin-impregnated or resin-impregnatable;
wherein in the second region (114) with the use of the pressure generating means (116) a counter-pressure can be produced so that the membrane (108) is pressed in the direction of the fibrous mat (112);
wherein the moulding tool (100) comprises a first seal (120) for sealing the first region (110) and the second region (114);
wherein the first seal (120) is mounted to the first mould (104) and has a first protrusion over the surface of the first mould (104);
wherein the moulding tool comprises an additional seal (126) for sealing the first region (110) and the second region (114);
wherein the additional seal has an additional protrusion that is smaller than the first protrusion.

2. The moulding tool (100) of claim 1, further comprising:
a second seal (118) for sealing the first region and the second region.
wherein the second seal (118) is mounted to the second mould (106) and has a second protrusion over the surface of the second mould (106).

3. The moulding tool (100) of claim 1 or 2,
wherein the additional seal is a third seal (126) and is mounted to the first mould (104);
wherein the third seal is arranged more outside with respect to the first region and the second region.

4. The moulding tool (100) of one of the preceding claims, further comprising:
a resin supply device (134),
wherein in the first region (110) by way of the resin supply device (134) resin for impregnating the fibrous mat (112) can be supplied to the moulding tool (100).

5. The moulding tool (100) of claim 4,
wherein the resin supply device (134) is formed in the first mould (104).

6. The moulding tool (100) of any one of the preceding claims,
wherein the pressure generating means comprises a fluid supply device (116),
wherein by way of the fluid supply device (116) fluid for producing the counter-pressure can be supplied to the moulding tool (100).

7. The moulding tool (100) of claim 6,
wherein the fluid supply device (116) is formed in the second mould (106).

8. The moulding tool (100) of any one of the preceding claims,
wherein a section (132) of the first mould (104) defines the surface geometry of a first side of the composite component (129), and a section (130) of the second mould (106) defines the surface geometry of a second side of the composite component (129).

9. The moulding tool (100) of any one of the preceding claims,
wherein the first mould (104) and the second mould (106) can be moved towards each other until a final position is reached in which the first mould (104) and the second mould (106) rest against each other,
wherein in the final position a cavity (128) is formed between the first mould (104) and the second mould (106).

10. The moulding tool (100) of claim 9,
wherein the cavity (128) defines the geometry of the composite component (129) to be produced.

11. The moulding tool (100) of any one of the preceding claims,
wherein the first mould (104) and the second mould (106) are movable towards each other up to an intermediate position in which the first mould (104) and the second mould (106) are further movable towards each other;
wherein in the intermediate position the first region (110) is sealed with respect to the environment of the moulding tool (100);
wherein in the intermediate position the second region (114) is sealed with respect to the environment of the moulding tool (100).

12. The moulding tool of any one of the preceding claims,
wherein the membrane is mechanically connected to the second mould (106).

13. A method for manufacturing a composite component, comprising the steps of:
arranging a fibrous mat (112) in a first region (110) between a first mould (104) of a moulding tool (100) and a membrane (108) arranged in the moulding tool (100);
moving the first mould (104) and a second mould (106) of the moulding tool (100) towards each other to an intermediate position in which a second region (114) between the second mould (106) and the membrane (108) is sealed with respect to the environment of the moulding tool (100);
generating a counter-pressure in the second region (114) so that the membrane (108) is pressed in the direction of the fibrous mat (112);
moving the first mould (104) and the second mould (106) towards each other to a final position, wherein in the final position a cavity (128) is formed between the first mould (104) and the second mould (106), which cavity defines the geometry of the composite component (129);
impregnating the fibrous mat (112) with resin, before the first mould and second mould are moved to the final position.

14. The method of claim 13, further comprising the step of:
connecting the membrane (108) to the fibrous mat (112).

15. The use of a moulding tool (100) of any one of claims 1 to 12 for manufacturing a composite component for an aircraft.

## Revendications

1. Outillage (100) destiné à fabriquer une pièce composite (129), comprenant :
un premier moule (104) ;
un second moule (106) ;
un moyen de génération de pression (116) ;
dans lequel, entre le premier moule (104) et le second moule (106), une membrane (108) peut être disposée de telle sorte qu'entre le premier moule (104) et la membrane (108) est formée une première zone (110) et entre le second moule (106) et la membrane (108) une seconde zone (114) ;
dans lequel, dans la première zone (110), un matelas fibreux (112) peut être disposé ;
dans lequel le matelas fibreux (112) est imprégné de résine ou peut être imprégné de résine ;
dans lequel, dans la seconde zone (114), une contre-pression peut être générée par le moyen de génération de pression (116) de telle sorte que la membrane (108) soit poussée en direction du matelas fibreux (112) ;
dans lequel l'outillage (100) comprend un premier joint d'étanchéité (120) destiné à rendre étanche la première zone (110) et la seconde zone (114) ;
dans lequel le premier joint d'étanchéité (120) est fixé au premier moule (104) et présente une première saillie sur la surface du premier moule (104) ;
dans lequel l'outillage comprend un autre joint d'étanchéité (126) destiné à rendre étanche la première zone (110) et la seconde zone (114) ;
dans lequel l'autre joint d'étanchéité présente une autre saillie inférieure à la première saillie.

2. Outillage (100) selon la revendication 1, comprenant en outre :
un deuxième joint d'étanchéité (118) destiné à rendre étanche la première et la seconde zone ;
dans lequel le deuxième joint d'étanchéité (118) est fixé au second moule (106) et présente une seconde saillie sur la surface du second moule (106).

3. Outillage (100) selon la revendication 1 ou 2,
dans lequel l'autre joint d'étanchéité (126) est un troisième joint d'étanchéité et est fixé au premier moule (104) ;
dans lequel le troisième joint d'étanchéité est disposé plus à l'extérieur par rapport à la première zone et à la seconde zone.

4. Outillage (100) selon une des revendications précédentes, comprenant en outre :
une amenée de résine (134),
dans lequel, dans la première zone (110), de la résine peut être amenée à l'outillage (100) par l'intermédiaire de l'amenée de résine (134) pour imprégner le matelas fibreux (112).

5. Outillage (100) selon la revendication 4,
dans lequel l'amenée de résine (134) est réalisée dans le premier moule (104).

6. Outillage (100) selon une des revendications précédentes,
dans lequel le moyen de génération de pression présente une amenée de fluide (116),
dans lequel le fluide peut être amené à l'outillage (100) par l'intermédiaire de l'amenée de fluide (116) pour générer la contre-pression.

7. Outillage (100) selon la revendication 6,
dans lequel l'amenée de fluide (116) est réalisée dans le second moule (106).

8. Outillage (100) selon une des revendications précédentes,
dans lequel une portion (132) du premier moule (104) définit la géométrie en surface d'un premier côté de la pièce composite (129) et une portion (130) du second moule (106) définit la géométrie en surface d'un second côté de la pièce composite (129).

9. Outillage (100) selon une des revendications précédentes,
dans lequel le premier moule (104) et le second moule (106) peuvent être rapprochés l'un de l'autre jusqu'à une position finale, dans laquelle le premier moule (104) et le second moule (106) s'appuient l'un contre l'autre, dans lequel, dans la position finale, une cavité (128) est formée entre le premier moule (104) et le second moule (106).

10. Outillage (100) selon la revendication 9,
dans lequel la cavité (128) définit la géométrie de la pièce composite (129) à fabriquer.

11. Outillage (100) selon une des revendications précédentes
dans lequel le premier moule (104) et le second moule (106) peuvent être rapprochés l'un de l'autre jusqu'à une position intermédiaire, dans laquelle le premier moule (104) et le second moule (106) peuvent encore être rapprochés l'un de l'autre ;
dans lequel la première zone (110) est étanche dans la position intermédiaire par rapport à l'environnement de l'outillage (100) ;
dans lequel la seconde zone (114) est étanche dans la position intermédiaire par rapport à l'environnement de l'outillage (100).

12. Outillage selon une des revendications précédentes,
dans lequel la membrane est reliée mécaniquement au second moule (106).

13. Procédé destiné à fabriquer une pièce composite, comprenant les étapes consistant à :
disposer un matelas fibreux (112) dans une première zone (110) entre un premier moule (104) d'un outillage (100) et une membrane (108) disposée dans l'outillage (100) ;
rapprocher l'un de l'autre le premier moule (104) et un second moule (106) de l'outillage (100) jusqu'à une position intermédiaire, dans laquelle une seconde zone (114) est étanche entre le second moule (106) et la membrane (108) par rapport à l'environnement de l'outillage (100) ;
générer une contre-pression dans la seconde zone (114) de telle sorte que la membrane (108) soit poussée en direction du matelas fibreux (112) ;
rapprocher l'un de l'autre le premier moule (104) et le second moule (106) jusqu'à une position finale, dans laquelle dans la position finale entre le premier moule (104) et le second moule (106) une cavité (128) est formée, laquelle définit la géométrie de la pièce composite (129) ;
imprégner le matelas fibreux (112) de résine, avant de déplacer le premier et le second moule dans la position finale.

14. Procédé selon la revendication 13, comprenant en outre l'étape destinée à :
relier la membrane (108) au matelas fibreux (112).

15. Utilisation d'un outillage (100) selon une des revendications 1 à 12 pour fabriquer une pièce composite pour un avion.
